# FASCICULE DE BREVET EUROPEEN

(11) **EP 0 580 466 B1**
(45) Date de publication et mention de la délivrance du brevet: **20.03.1996**
(21) Numéro de dépôt: 93401625.4
(22) Date de dépôt: 24.06.1993
(51) Int. Cl.: A23L 3/36

(54) **Procédé et installation pour la surgélation de produits alimentaires ainsi que les produits surgelés obtenus**
Verfahren und Vorrichtung zur Tiefkühlung von Nahrungsmitteln und so hergestellte tiefgekühlte Produkte
Process and apparatus for deep frozen foodstuff and deep-frozen products obtained thereby

(30) Priorité: 21.07.1992 FR 9208981
(43) Date de publication de la demande: 26.01.1994
(73) Titulaire: DEW, Roger Barlow, F-75015 Paris (FR)
(72) Inventeur: DEW, Roger Barlow, F-75015 Paris (FR)
(74) Mandataire: Cabinet Pierre HERRBURGER

(56) Documents cités:
- EP-A- 0 372 354
- EP-A- 0 473 851
- WO-A-82/03580
- US-A- 4 576 014

## Description

On connaît déjà par la demande européenne N° 0 473 851 un appareil de refroidissement sous vide suivant lequel des conteneurs contenant les produits à refroidir sous vide sont empilés les uns au-dessus des autres, le conteneur inférieur de la pile étant successivement ôté latéralement, après traitement, alors qu'un nouveau conteneur, non encore traité, est placé sur le dessus de la pile.

La demande européenne N° 0 372 354 décrit quant à elle un tunnel de congélation rectiligne légèrement incliné. Les produits à congeler sont introduits à l'extrémité supérieure du tunnel où ils tombent dans un bain d'azote liquide. La rotation du tunnel sur lui-même fait sortir les produits du bain d'azote et ces produits s'écoulent alors le long du tunnel vers un orifice de sortie.

Suivant le procédé de l'invention, la surgélation est obtenue à l'aide d'un tunnel de surgélation comprenant un tapis sans fin présentant une structure hélicoïdale, les produits à surgeler étant déposés en appui, par leur face inférieure, sur le tapis sans fin à hauteur d'un orifice d'introduction des produits dans le tunnel pour en être évacués, à l'état surgelé, à hauteur d'un orifice de sortie, procédé caractérisé en ce que les produits à surgeler sont déposés sur le tapis sans fin à l'état refroidi au moins sur leur face inférieure, ces produits étant refroidis par un ensemble de réfrigération disposé à proximité de l'orifice d'introduction du tunnel et comportant au moins une plaque réfrigérante sur laquelle défile en appui un matériau souple, rectiligne, en feuille, supportant le produit à refroidir.

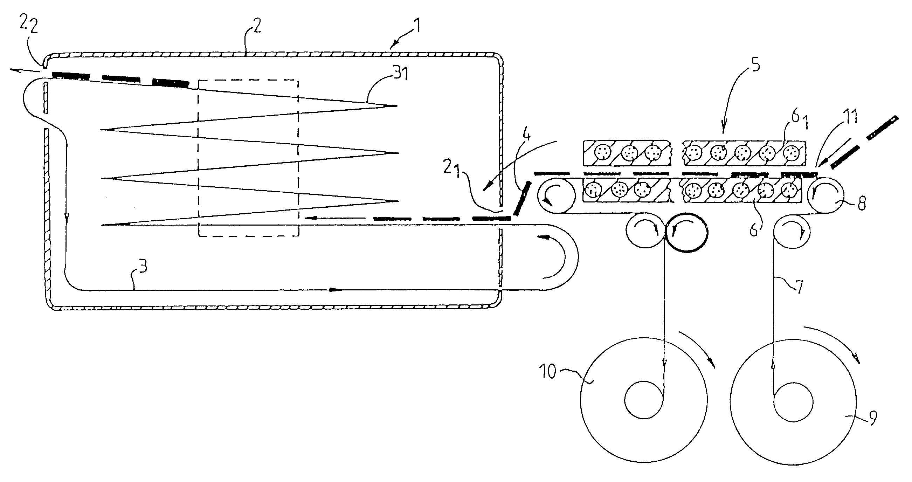

Le procédé de l'invention est illustré sur l'unique dessin ci-joint qui représente, en vue latérale schématique, un mode de réalisation de l'installation pour la mise en oeuvre de ce procédé.

L'invention a principalement pour but de réaliser avec une hygiène irréprochable la surgélation de produits alimentaires dans un tunnel de surgélation à tapis sans fin hélicoïdal, tout en évitant la déformation du produit en cours de surgélation.

La présente invention permet également d'éviter les pertes de poids du produit par déshydratation ainsi que de réduire considérablement l'accumulation de givre sur les évaporateurs du tunnel.

Suivant l'invention, il est ainsi prévu de combiner un ensemble rectiligne de refroidissement, dans lequel les produits à refroidir sont disposés sur un support rectiligne de préférence non réutilisé, à un tunnel de surgélation à tapis sans fin hélicoïdal qui défile en continu pour surgeler les produits. L'ensemble de réfrigération a essentiellement pour but de glacer le produit à surgeler, au moins sur sa face inférieure, afin de réaliser un croûtage de cette face dans des conditions d'hygiène optimum et sans déformation du produit, ce produit étant ensuite déposé sur le tapis à structure hélicoïdale d'un tunnel de surgélation.

Ainsi, étant donné que le produit déposé sur le tapis sans fin hélicoïdal est déjà "croûté" sur sa face inférieure, il n'est pas susceptible de coller au tapis sans fin lors de la surgélation et donc il peut se déplacer par rapport au tapis sans fin sans se déformer lorsque celui-ci prend sa forme hélicoïdale.

Egalement, du fait que le produit alimentaire est déjà "croûté" lors de son introduction dans le tunnel de surgélation, on supprime, dans ce tunnel, les phénomènes d'évaporation de l'eau contenue dans le produit à surgeler en réduisant donc considérablement l'accumulation de givre sur les évaporateurs de ce tunnel.

Enfin, étant donné que les produits à surgeler sont préalablement "croûtés" dans un ensemble de refroidissement alors qu'ils reposent sur une feuille de matériau non réutilisée, on garantit non seulement une hygiène optimum du produit dans toute la chaîne de surgélation mais on évite également la perte de poids de ce produit par déshydratation sur la surface en contact avec le support.

Suivant le dessin ci-joint, l'installation comprend ainsi un tunnel de surgélation 1 comportant, à l'intérieur d'une enceinte 2, un tapis sans fin 3 présentant une structure hélicoïdale 3₁ destinée à supporter les produits lors de leur surgélation.

Cette enceinte 2 comporte également les circuits de refroidissement connus en eux-mêmes et non représentés sur les dessins.

Les produits à surgeler 4 sont disposés sur le tapis sans fin 3 à hauteur d'un orifice 2₁ d'introduction des produits dans le tunnel 1 et sont évacués de ce tapis sans fin à hauteur d'un orifice 2₂ de sortie des produits surgelés.

Les produits 4 qui sont déposés sur le tapis sans fin 3 à hauteur de l'orifice d'introduction 2₁ sont issus de l'ensemble de refroidissement 5 qui est disposé à proximité de cet orifice 2₁ afin de déposer directement les produits refroidis sur le tapis sans fin 3.

Cet ensemble de refroidissement 5 comprend une plaque de refroidissement 6 à l'intérieur de laquelle sont, par exemple, prévues des tubulures de circulation d'un fluide de refroidissement. Sur la face supérieure de cette plaque 6, défile un matériau souple rectiligne en feuille 7 passant par ailleurs sur des rouleaux de guidage 8 et issu d'une bobine de feuille 9.

Ce matériau en feuille peut être en papier, en matière plastique, par exemple du polyéthylène, en métal tel que de l'aluminium ou une combinaison de plusieurs de ces matériaux.

Le produit à refroidir est déposé en 11 sur le brin rectiligne de cette feuille 7 lui-même en appui sur la plaque 6 et est donc déplacé simultanément à l'avancement de la feuille 7 afin d'obtenir un croûtage d'au moins la face inférieure du produit 4 par contact de cette face avec la plaque de refroidissement 6 avec, comme élément intermédiaire, le brin rectiligne de la feuille 7 en appui sur cette plaque 6.

Dans l'exemple représenté, cette feuille 7 issue de la bobine 9, est récupérée sur une bobine 10.

Ce matériau en feuille 7 n'est donc pas de préférence réutilisé, ce qui garantit une hygiène optimum dans toute la chaîne de froid et notamment à hauteur du tapis sans fin 3 puisque les produits à surgeler sont préalablement "croûtés" sur une surface non réutilisée.

Dans l'exemple représenté, les produits refroidis sont déposés directement par le matériau en feuille 7 sur le tapis sans fin 3 mais, bien entendu, si cela est jugé souhaitable pour des questions de fabrication, un mécanisme de transfert intermédiaire pourra être prévu entre l'ensemble de refroidissement 5 et le tunnel 1 s'il apparaît nécessaire pour des raisons d'implantation des ensembles combinés, étant entendu que le produit à surgeler déposé devra être dans des conditions de température telles qu'il ne "colle" pas au tapis hélicoïdal lors de sa surgélation.

Egalement, si désiré, une seconde plaque de refroidissement 6₁ pourra être prévue au-dessus de la plaque 6 afin de compléter le croûtage de la face inférieure des produits 4 et afin également de réduire encore les pertes de poids par déshydratation du produit ainsi que l'accumulation de givre sur les évaporateurs du tunnel 1. Si cette plaque 6₁ doit être en contact de la face supérieure du produit 4, dans ce cas bien entendu une feuille 7 sera également prévue sur sa face supérieure.

Dans la mesure où cette plaque de refroidissement supérieure 6₁ n'agit pas par contact et ne supporte pas les produits 4, elle pourra être remplacée par un autre moyen de réfrigération et, par exemple, un évaporateur avec ailettes et ventilateurs.

Bien entendu, la vitesse de défilement du matériau en feuille 7 sera réglable et afin de l'adapter à la vitesse d'avancement du tapis sans fin 3.

## Revendications

1. Procédé pour la surgélation de produits alimentaires à l'aide d'un tunnel de surgélation (1) comprenant un tapis sans fin (3) présentant une structure hélicoïdale (3₁), les produits (4) à surgeler étant déposés en appui, par leur face inférieure, sur le tapis sans fin à hauteur d'un orifice (2₁) d'introduction des produits dans le tunnel pour en être évacués, à l'état surgelé, à hauteur d'un orifice de sortie (2₂), procédé caractérisé en ce que les produits à surgeler sont déposés sur le tapis sans fin (3) à l'état refroidi au moins sur leur face inférieure, ces produits étant refroidis par un ensemble de réfrigération (5) disposé à proximité de l'orifice d'introduction du tunnel et comportant au moins une plaque réfrigérante (6) sur laquelle défile en appui un matériau souple, rectiligne, en feuille, supportant le produit à refroidir.

2. L'installation pour la mise en oeuvre du procédé conforme à la revendication 1.

3. Installation conforme à la revendication 2, caractérisée en ce que la feuille de matériau souple (7) dépose directement les produits refroidis (4) sur le tapis sans fin (3).

## Claims

1. Process for deep-freezing food products with the aid of a deep-freezing tunnel (1) comprising a conveyor belt (3) having a helicoid structure (3₁), the products (4) to be deep-frozen being arranged being supported by their lower face on the conveyor belt level with the height of an orifice (2₁) for introducing the products into the tunnel, before being removed, deep-frozen, level with the height of an exit orifice (2₂), which process is characterized in that the products to be deep-frozen are arranged on the conveyor belt (3) in the cooled state, at least on their lower face, these products being cooled by a refrigeration assembly (5) arranged in proximity to the introduction orifice of the tunnel and including at least one refrigerating plate (6) over which a straight, flexible sheet-form material which supports the product to be cooled moves while being supported.

2. Installation for implementing the process according to Claim 1.

3. Installation according to Claim 2, characterized in that the sheet of flexible material (7) deposits the cooled products (4) directly on the conveyor belt (3).

## Patentansprüche

1. Verfahren zur Tiefkühlung von Nahrungsmitteln mittels eines Tiefkühltunnels (1) umfassend ein Endlosband (3) mit einer schraubenförmigen Anordnung (3₁), wobei die Tiefkühlprodukte (4) zur Unterstützung mit ihrer Unterseite auf das Endlosband in Höhe einer Öffnung (2₁) zur Zuführung der Produkte in den Tunnel abgelegt werden, um im tiefgekühlten Zustand in Höhe einer Ausgangsöffnung (2₂) abtransportiert zu werden,
dadurch gekennzeichnet,
daß die auf dem Endlosband (3) abgelegten Tiefkühlprodukte zumindest auf ihrer Unterseite einen gekühlten Zustand aufweisen und daß die Produkte durch ein Kühlaggregat (5) gekühlt werden, das in der Nähe der Zuführungsöffnung des Tunnels angeordnet ist und zumindest eine Kühlplatte (6) aufweist, auf der als Unterlage ein biegsames, geradliniges Material aus Folie vorbeiläuft, das die Kühlprodukte trägt.

2. Vorrichtung zur Durchführung des Verfahrens nach Anspruch 1.

3. Vorrichtung nach Anspruch 2,
dadurch gekennzeichnet,
daß die Folie aus biegsamem Material (7) die gekühlten Produkte (4) direkt auf das Endlosband (3) ablegt.
